# EUROPEAN PATENT APPLICATION

(11) **EP 4 310 611 A1**
(43) Date of publication of application: **24.01.2024**
(21) Application number: 22185812.9
(22) Date of filing: 19.07.2022
(51) Int. Cl.: G05B 19/418

(54) **METHOD FOR OPERATING A PLURALITY OF PRODUCTION PLANTS BY REGIONAL HUB CONCEPT OF THE MANUFACTURING EXECUTION SYSTEM SOLUTIONS**

(71) Applicant: Siemens Aktiengesellschaft, 80333 München (DE)
(72) Inventor: Doria, Francesca, 16132 Genova (IT); Bozano, Benedetto, 16122 Genova (IT); Romagnoli, Alessio, 17047 Quiliano (SV) (IT); Magagnini, Marco, 16137 Genova (IT)
(74) Representative: Siemens Patent Attorneys

(57) **Abstract**

It is the objective of the present invention to define a method that allows simplify the administration of an in particular larger MES/MOM project that may involve a plurality of manufacturing sites and a plurality of servers that require a stringent guidance on keeping patch and update threshold as low as possible.

This objective is achieved according to the present invention by a method for operating a plurality of production plants by a manufacturing execution system, said method comprising the steps of:
a) providing a central computational hardware as regional hub for running an MES software; said MES software being enabled to manage production processes throughout the plurality of production plants;
b) configuring a first manufacturing execution system for a first single plant being connected to the regional hub;
c) creating for each further plant the respective manufacturing executions system by inheriting all configurations of the first manufacturing execution system to these further manufacturing executions systems; and
d) configuring these additional plants over time in the existing solution in the regional hub without re-installing the software of the manufacturing executions system and without re-applying some configurations already performed in the first plant and/or without stopping the system.

This method therefore offers a better value for multi-plant solutions by decreasing the TCO. In practice, the same number of servers that is in the prior art needed to host the MES/MOM solution serving a single manufacturing plant is now made available to manage multiple plants (as represented in Figure 1). This set of servers constitutes a single MES/MONM solution distributed environment and is hosted by the same regional hub or anyway a single "virtual datacenter", according to the features provided by Cloud providers, in case a public Cloud deployment is chosen.

## Description

The present invention relates to a method for operating a plurality of production plants by a manufacturing execution system.

In the world of process automation and process monitoring standard automation systems for controlling the widest conceivable variety of production resources, machines and plants (MOM objects) are state of the art. Such technology covers in particular a broad range of products which are offered by the Siemens Corp. under its OpCenter^{®} product family with the field of manufacturing operation management (MOM). An extensive line of products for solving the technical tasks in question such as counting, measuring, positioning, motion control, closed-loop control and cam control enhance the performance capabilities of appropriate process controllers. A variety of configurations enable the implementation of flexible machine concepts.

In this context a broad range of IT solutions exist to connect the actual hardware close to the technical and/or logistical process to the application layer of the client driving the installation. Manufacturing execution systems (MES) have therefore been developed to meet all of the requirements of a service-oriented architecture (SOA) to integrate seamlessly into a totally integrated automation (TIA). A plug & play architecture, in which the individual functions can be configured and easily combined with each other thereby forms the basis for this success thereby simplifying the complex structures of controlling a manufacturing plant or the like.

These demands very often require in the backbone rather complicated and sophisticated software solutions which enable the approach of totally integrated automation. In view of this, the software engineers very often use production modeling software to define the plant model and its standard operating procedures and create the respective new software by means of a high-level graphical language which identifies the workflow of activities within the software. Subsequently, this string/term of high-level graphical language is translated into a client based software language executable on the machine language level. This translation requires tremendous efforts in programming and need serious testing to check whether the translated program behaves the same as the original string/term of the high level graphical language.

Within this MES environment a software for a detailed production scheduling (PDS) is provided which concerns the sequencing and the timing of production operations on all manufacturing resources. This software has the aim to create an executable and optimized production schedule that will be executed in production. Before the schedule will be computed, the PDS software needs to be fed with the main input from a plant database such as:
a) the plant logical layout and material flow constraints;
b) the equipment and personnel standard production rates;
c) the availability, the calendar and the status for the equipment and personnel;
d) knowledge on the way of production (recipes, routings, etc.), process and business constraints;
e) the skills provided by the production resources

Together with this information the PDS software builds its internal model of the plant and of the production process within this plant. Subsequently, by applying the scheduling algorithms to this internal plant model of the plant's resources (MOM objects) and production process, the PDS software computes an executable production schedule which does not violate any physical, logistical and/or business constraints and which optimizes the manufacturing performance.

When now the TCO of a MOM solution, it can be realized that it is related to a variety of factors, some of which tend to be underestimated at the beginning of a project or even of a big program.

Costs are much higher than the one strictly related to the MOM solution itself. The MOM solution is hosted on servers, implying additional costs both from the point of view of the HW and of the SW needed by the MES program, such as Siemens Opcenter^{®} EX FN as a prerequisite. SW - both in terms of the SW and its pre-requisites - must be installed, and the needed service time depends on the number of servers. This can be high in case of large projects (both in terms of number of physical plant and of concurrent users).

Additional costs are related to the maintenance of the SW over time (both MES SW and its pre-requisites): considerable IT and project team service time is needed for the installation of the updates and patches. This time grows with the number of servers and has a significant impact on the budget, also because it occurs periodically. On the other hand, this time is also subtracted to activities that could provide a real business value (like user support, implementation of new features or the increase of the user experience).

A high number of environments has also indirect consequences. The governance of the project is more complex, for different reasons:
The probability of human errors in the installation of updates and patches grows with the number of environments which must be updated. As a result, troubleshooting of issues occurring on a single system becomes difficult, especially when support is needed by professionals who were not involved in the update process (like GTAC).

Also, system configuration is complex and expensive in terms of effort. In fact, when multiple plants are in scope for the project, the personnel of the different plants is used to its specific procedures and is a bit reluctant to change them, resulting in a big number of configuration and business logic differences from plant to plant even when not really necessary. Often the customer stakeholders tend to indulge these requests, to increase general MOM solution user satisfaction.

The lack of standardization and harmonization of the functionality across plants has an impact on the project costs and MOM solution reliability, which tends to be underestimated in the requirements analysis phase because it is difficult to isolate it. It emerges later in the evolution of the project when it becomes evident that guiding the workers in the change process would have minimized the impact on the MOM solution users and generated great benefits for the project success.

Thus, it is the objective of the present invention to define a method that allows simplify the administration of an in particular larger MES/MOM project that may involve a plurality of manufacturing sites and a plurality of servers that require a stringent guidance on keeping patch and update threshold as low as possible.

This objective is achieved according to the present invention by a method for operating a plurality of production plants by a manufacturing execution system, said method comprising the steps of:
a) providing a central computational hardware as regional hub for running an MES software; said MES software being enabled to manage production processes throughout the plurality of production plants;
b) configuring a first manufacturing execution system for a first single plant being connected to the regional hub;
c) creating for each further plant the respective manufacturing executions system by inheriting all configurations of the first manufacturing execution system to these further manufacturing executions systems; and
d) configuring these additional plants over time in the existing solution in the regional hub without re-installing the software of the manufacturing executions system and without re-applying some configurations already performed in the first plant.

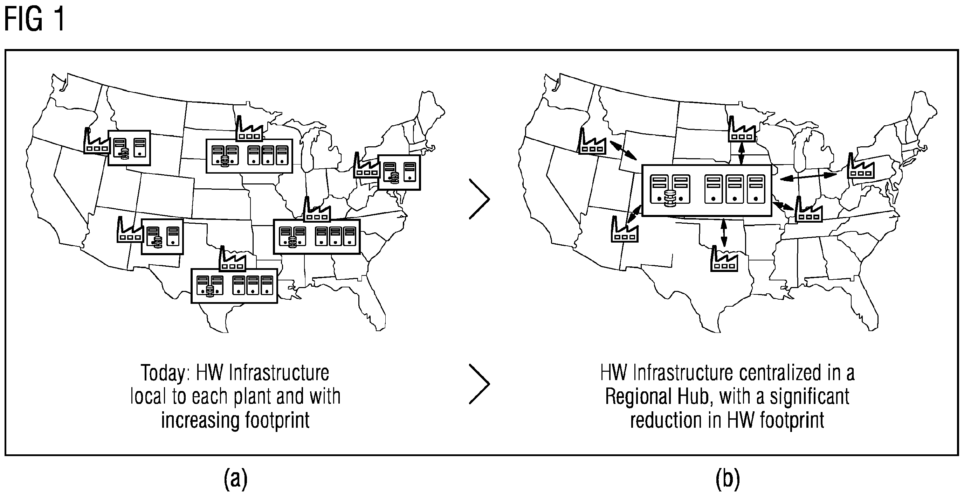

This method therefore offers a better value for multi-plant solutions by decreasing the TCO. In practice, the same number of servers that is in the prior art needed to host the MES/MOM solution serving a single manufacturing plant is now made available to manage multiple plants (as represented in Figure 1). This set of servers constitutes a single MES/MONM solution distributed environment and is hosted by the same regional hub or anyway a single "virtual datacenter", according to the features provided by Cloud providers, in case a public Cloud deployment is chosen.

Preferred embodiments of the present invention are given in the additional claims 2 to 12

Preferred embodiments are hereinafter described in more detail with reference to the attached drawings which depict in:
- Figure 1: schematically a set-up for a multi-plant concept today (a) and after the implementation of the present invention (b);

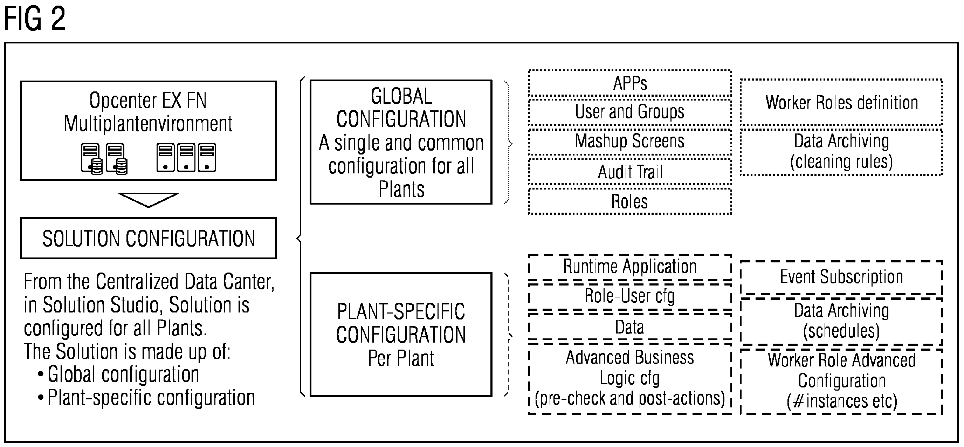

- Figure 2: schematically common and plant-specific configurations;

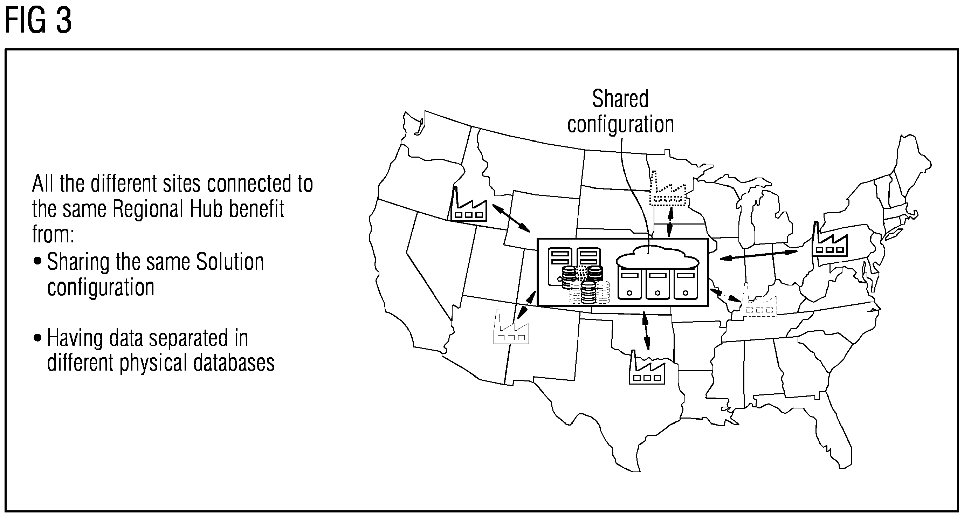

- Figure 3: schematically shared configuration and data multitenancy;
- Figure 4: schematically a scheme for common and plant specific deployed configurations;

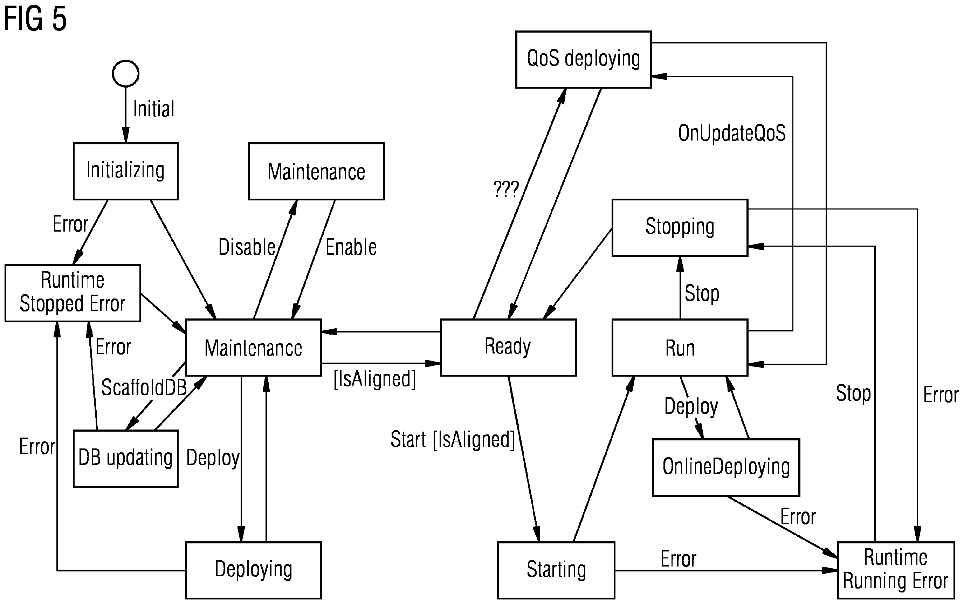

- Figure 5: schematically a state machine for a configured plant;

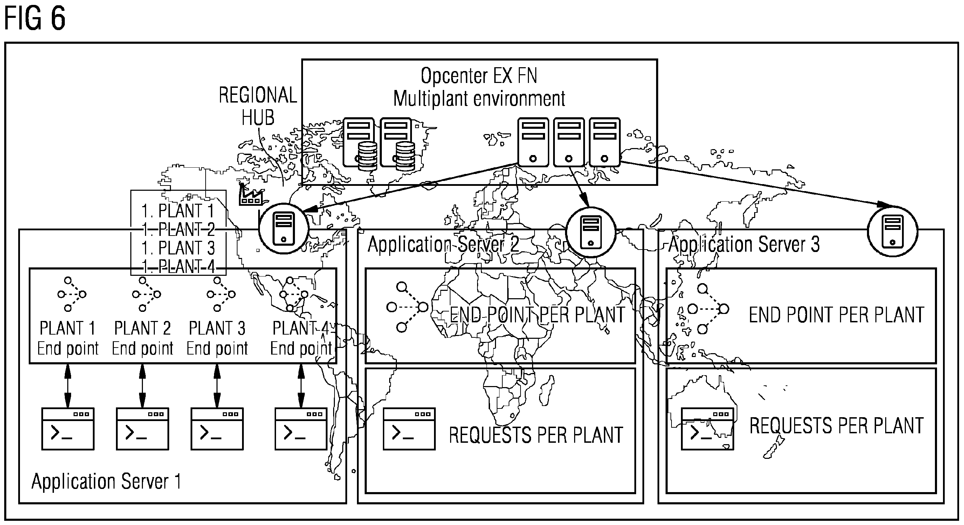

- Figure 6: schematically a deployment and execution scheme;
- Figure 7: schematically a scheme for High level run-time decomposition; and

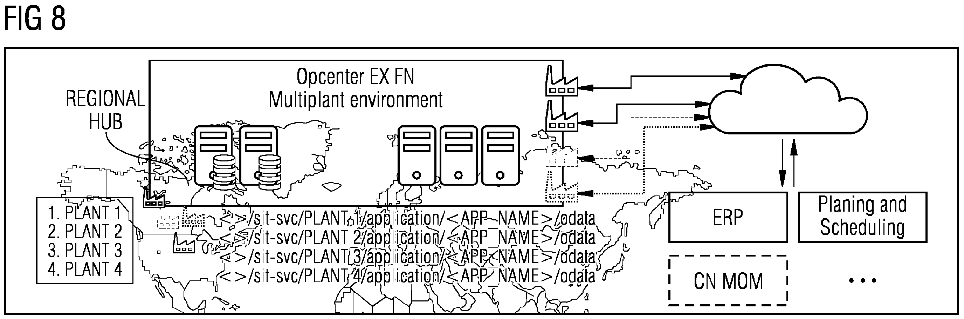

- Figure 8: schematically a scheme on interoperability.

The present invention is part of an MES/MOM solution, such as distributed under the trade name of Opcenter^{®} EX FN by the Siemens^{®} AG and aims at providing a better value for multi-plant solutions by decreasing the TCO. In practice, the same number of servers that is currently needed to host the MOM solution serving a single manufacturing plant will be able in the future to manage multiple plants (as represented in Figure 1). This set of servers constitutes a single MES/MOM solution distributed environment and will be hosted by the same regional hub (or anyway a single "virtual datacenter", according to the features provided by Cloud providers, in case a public Cloud deployment is chosen). Based on Customer IT needs, the servers of this MES/MOM solution distributed environment can be alternatively:
Physical in-house servers (local to one of the plants);
Private Cloud Virtual Machines (hosted by an on-premises virtual environment like VMWare, local to one of the plants); and/or Public Cloud IaaS instances (hosted by a public Cloud provider datacenter).

Figure 1 provides an idea of the benefits that the customer can reach with the multiplant approach. First of all, the customer that is going to adopt this approach is going to be much faster in terms of delivering innovations to the plant, because the rollout speed is going to increase a lot. The increase factors shown here have been measured in a real project.

When a MES/MOM project starts to change from a local installation pattern to the inventive centralized installation approach, it has been measured that it is three time faster in terms of deployment, and this is of course a huge benefit for the customers because they can deploy new innovation functionalities to the plant in a much faster way. Also, there is no need to spend time on working on complex upgrades on project plants, because all the plants should be at the same level in terms of solution and product version.

All the administration of the system is going to be reduced, and this is a benefit also from the IT perspective, not only for the hardware, but also for the IT resources, e.g. for example in terms of the database engineers and the system administrators that the customers must put in place to administer the MES/MOM system.

Another benefit regards of course the infrastructural overall costs, because less hardware is needed to deploy the same number of plants and also the implementation of the solution. Finally, with this approach, the customer is going to reduce implementation costs, going towards a harmonized solution template with same functionalities delivered on more plants, with slight differences per plant (if desired).

This feature will be referred to as multi-plant concept/solution/support in the following. See the first 5 points below:

| #Point | |
|---|---|
| Point 1: Regional Hub | How Multi-plant solution hub architecture enables multiple production sites to use single solution instance |
| Point 2: How to Manage the Manufacturing Solution in a Multiplant scenario | How to promote manufacturing process standardization while retaining flexibility for plant specific needs |
| Point 3: Side-by-side deployment | How a Multi-plant solution can be deployed without affecting the production in the other Sites |
| Point 4: Avoiding single point of failure | How Multi-plant solution guarantees data separation per Plant and dedicated SW processes |
| Point 5: Diagnostic and Supportability | How centralized solution administration allows remote management and monitorinq of the system |
| Point 6: How to manage Plant differences | How Multi-plant solution allows to configure Plant differences |

### Point 1: Regional Hub

The Regional Hub operates for all plants and it is up to the user to choose the suitable Regional Hubs from the infrastructure perspective (CPU, RAM, Disk, Redundant Network, and so on). In this way, the same number of servers that is currently needed to host the MOM solution serving a single manufacturing plant can manage multiple plants.

The servers of this MES/MOM solution distributed environment can be alternatively:
Physical in-house servers (local to one of the plants).
Private Cloud Virtual Machines (hosted by an on-premises virtual environment like VMWare, local to one of the plants).
Public Cloud IaaS instances (hosted by a public Cloud provider datacenter)

All different sites connected to the same Regional Hub benefit from:
- sharing the same Solution configuration
- having separated data in different physical databases
- having separated SW processes for business logic execution and data querying

There are many benefits from running a multiplant scenario:
- Costs are reduced due to the limited number of servers to be installed and on which updates and patches must be applied.
- The overall architecture is simplified, reducing any human error during the system alignment.
- The rollout time for a new plant is reduced.
- Standardization and harmonization are enabled, implying lower configuration effort.

On the other hand, a multiplant scenario ensures:
Business continuity: a plant has no downtime during updates on the other plants requiring a stop and during the rollout of new plants. Security and Usability: you have visibility on and can modify only the data related to your plant.

Robustness: the performance and the behavior of one plant is not affected by workload peaks or eventual issues on other plants. Multilanguage: you can see both User Interface and data in your own language.

The better approach to configure a multiplant scenario is to start configuring a single plant, connected to the Regional Hub. For this reason, the creation of a first plant is mandatory. Then, any other required plant can be created. These additional plants can be configured over time in the existing solution in the Regional Hub, without re-installing the product and without re-applying some configurations already performed in the first plant. Indeed, both from the environment and the solution perspective, some configurations are common to all plants. This means that, once performed in one plant, they are automatically applied to all available plants, regardless of when the plants are created. Instead, other configurations are plant-specific and can be performed according to the plant needs.

| Area | Configuration Type | Common Configuration | Plant-Specific Configuration | Notes |
|---|---|---|---|---|
| Environ ment | Environment Name Deployment Mode (standalone or distributed) RabbitMQ Configuration Licensing | 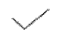 | | |
| Data Source | Authentication Mode | 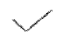 | 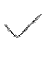 | This configurati on can be common to all plants or plant-specific, according to your needs. |
| Integra tion | Enable SAM Authentication Xcelerator Share Configuration | 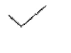 | | |
| Web End Points | Protocol/FQDN | 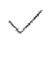 | | The final end point is configured after the Solution deployment, considering plants configurati on |

The process data related to the different plants will be visible only to the users enabled for the relevant plant. All process data, including master data (e.g., materials, master recipes or bills of process), is stored in different repositories. If some process data is relevant for multiple plants, it must be exported and imported among the different plant repositories. Of course, there could be also a section in a central database that is shared among the various plants.

### Configuration Flow

The user can create one or more plants, which are served by a centralized Regional Hub.

### Configure the environment by defining the first plant

(Optional) Configure and deploy Manufacturing Solution for the first plant (if needed)
Add additional plants via Plant Configuration Tool, by minding that there are common and plant-specific configurations
Configure and deploy the Manufacturing Solutions for the additional plants (see How to manage the Manufacturing Solution in a Multiplant scenario)

### Point 2: How to Manage the Manufacturing Solution in a Multiplant scenario

The Manufacturing Solution is only one for all available plants. Indeed, the user must create and configure it for the first plant. Then, when additional plants are available, this Manufacturing Solution is automatically inherited by any additional plant with all the performed common configurations. At this point, the user can apply the required plant-specific configurations, according to the plant needs. This fosters harmonization, still allowing flexibility at plant level when required.

Once the Manufacturing Solution is configured, the user can deploy it plant by plant, as well as start it on the runtime hosts and update the database structures. For this purpose, the Host Management page will display all available plants, regardless of the plant the user is working on. When stopping the host, all plant services are automatically stopped. The advantages for the side-by-side deployment (see Point 3: side-by-side deployment) are:
- deploying a plant without any impact on the other plants
- scheduling when the changes will be applied, according to the plant needs, for example at the shift change in a plant that could not coincide with the shift change in another plant.

| Configuration Type | Common Configuration | Plant-Specific Configuration | Note |
|---|---|---|---|
| Apps/Extension Apps/Functional Blocks | 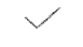 | | Apps/Extension Apps installed in one plant are automatically installed in all available plants. |
| Worker Role | (Definition and business logic assignment) | (Number of instances) | Number of instances are per plant **to better distribute the workload** |
| Pre-checks | | 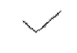 | **Pre-checks are plant specific.** Therefore, for the same command, the same Pre-check can be enabled in a plant and disabled in another plant. |
| Post-Actions | | 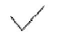 | **Post-actions are plant specific.** Therefore, for the same command, the same Post-Action can be enabled in a plant and disabled in another plant. |
| Event Subscriptions | | 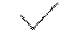 | The **event subscription** (how the system react upon events) **is per plant** |
| Roles and Function Riqhts | 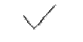 | | |
| User-Roles configuration | | 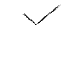 | The User Roles must be the same for all the plants, but they can be configured as a super-set of the single User Roles of each plant. **User Roles can be assigned to the Users and Groups of the different plants.** In this way: |
| | | | • Different UI screens can be displayed |
| | | | • Different actions are allowed |
| | | | • Different data are visible |
| Mashup Screens | 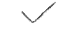 | | |
| Runtime Application | | 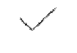 | **The user Interface can be configured per plant,** so you can differentiate the landing page and the related screens |
| Data Maintenance | (Scheduling and cleaning rule configuration) | (Enablement per plant) | You can schedule cleaning rules and data archiving based on plant needs |
| Audit Trail | 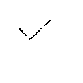 | | The Audit Trail can be: |
| | | | • Either enabled or disabled for all the plants. |
| | | | • Configured in the same way for the different plants in terms of audited entities. |
| Data Source (Third-party included) | | 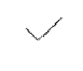 | The process data related to the different plants will be visible only to the users enabled for the relevant plant. All the process data, including master data (e.g., materials, master recipes or bills of process), will be stored in different repositories **(multi tenancy)** |

The MES/MOM solution also allows:
- updating the database structures plant by plant
- starting the Manufacturing Solution on the runtime hosts plant by plant
- stopping the host to proceed with maintenance operations, such as installing security patches. When stopping the host, all plant services are automatically stopped.

More details are described in Point 4: Avoiding single point of failure

### Point 3: Side-by-side deployment

Build and Solution deployment are managed per plant, since it is in the interest of each site to plan Solution changes deployment based on its production time. General speaking, a plant has no downtime during updates on the other plants requiring a stop and during the rollout of new plants. Consequently, it might be possible:
- change solution configuration
- build solution per plant to create the packages with global and plant-based configuration (in the example below, the changes are made for Plant N)
- deploy the above configurations
- perform the DB Scaffolding (if required) only for this specific Plant

From a technical point of view, all the configuration performed (security, web ui application, data archiving etc) are stored in a configuration database and contextualized per Plant. Configurations and artifacts that are required at runtime are consolidated in the Governance Repository creating a deployment package.

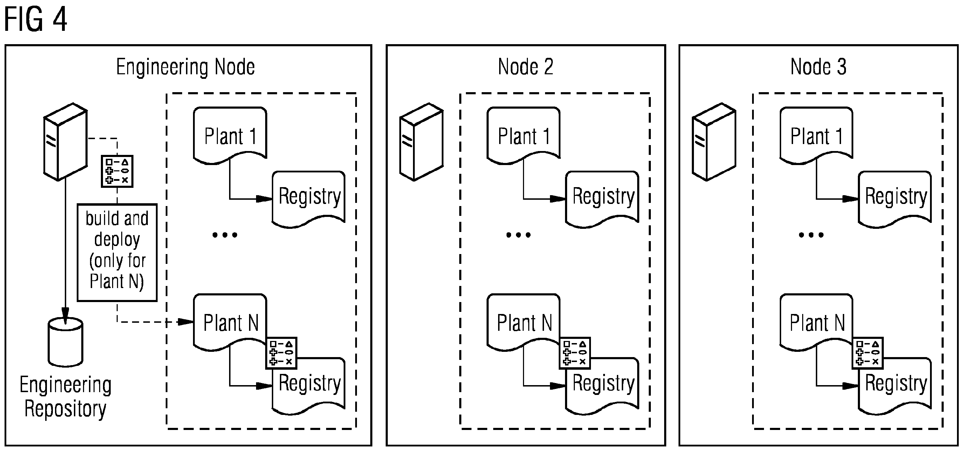

Along the deployment phase, the deployment package is then extracted from the Governance repository to the local runtime configuration. In particular, the deploy phase is executed locally by each runtime node (see Figure 4). Some specific commands take care of getting the Plant-based deployment package, copying all relevant artifacts (assemblies, metadata files, etc) to the relevant runtime location and updating the runtime database. The following schema shows the Governance Registry file and how the configuration are split per Plant.

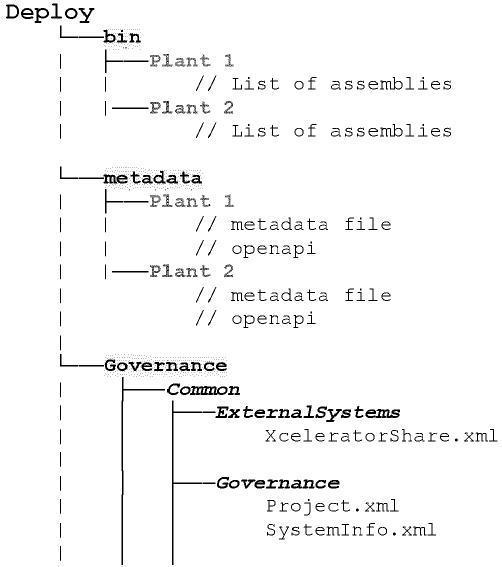

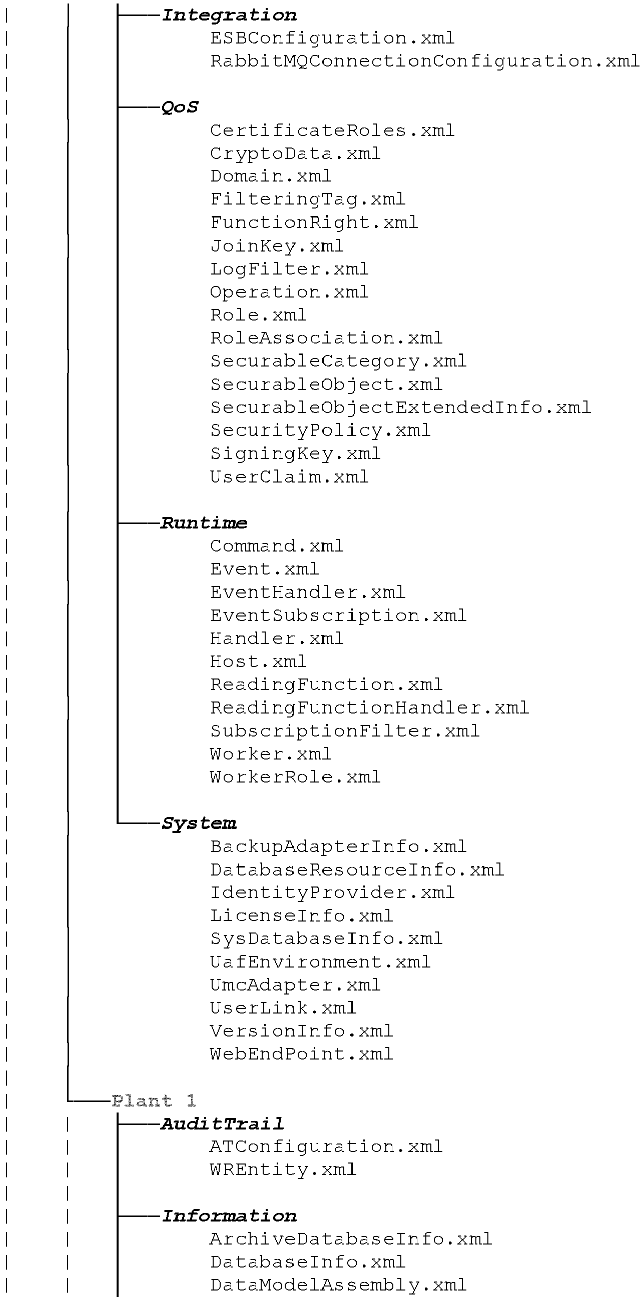

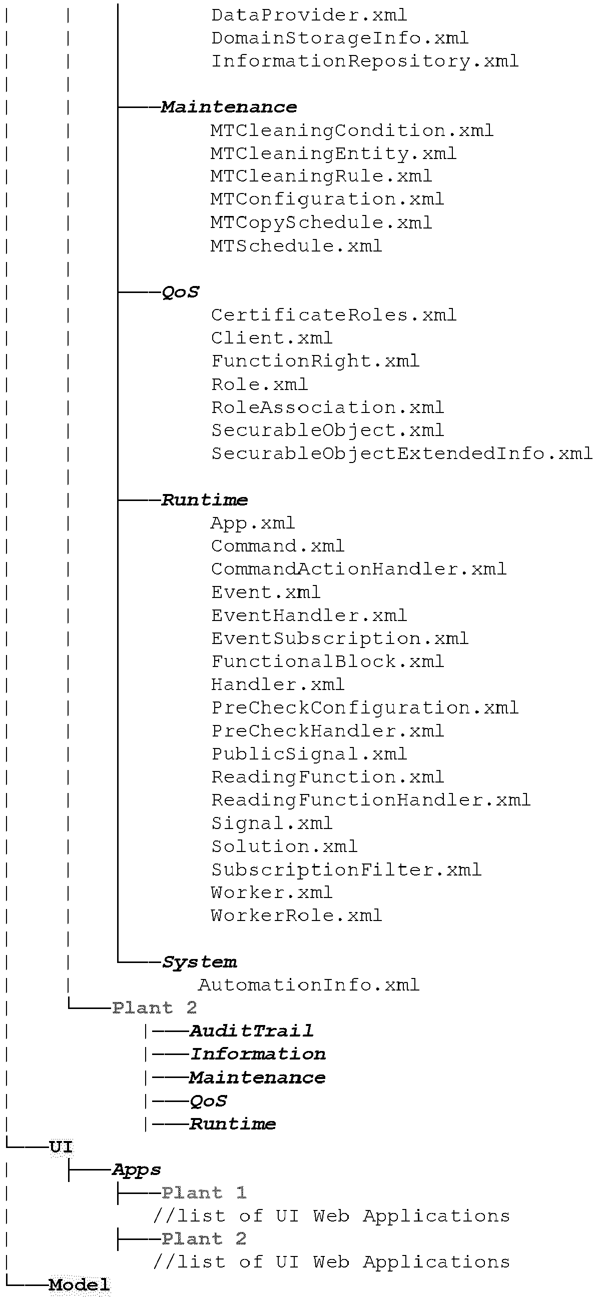

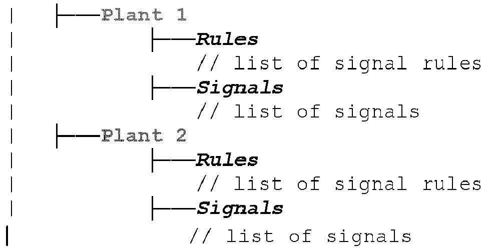

The specific commands which regulate the deploy phase on each node are:
Stop: the operation stops the plant-based business workers and service layer
Deploy: the new version of the solution, made up of common and plant-based configuration, is copied locally. According to the degree of the change, the deploy can require or not to stop and set the Solution for that Plant to maintenance state.
Start: the operation reset the maintenance and launches the plant-based business workers and the service layer
Update Database: the operation creates/updates the runtime and (if configured) archiving plant-based database
Disable: To exclude the selected host from the runtime scenario: the host status is set to Offline. This operation is possible only on stopped hosts and will affect all configured Plants
Enable: To enable any previously disabled hosts. This operation affects all configured Plants

With the introduction of the multiplant, one state machine is available for each plant since each plant can assume states of the state machine during its own Solution lifecycle.

### Point 4: Avoiding single point of failure

End Points, software runtime processes and Tenants are per Plant to avoid the performance and the behavior of one plant is affected by workload peaks or eventual issues on other plants.

### Figure 1: Deployment and Execution

The following diagram depicts the main run-time components and their dependencies.

The components are grouped in engineering and administration components, which are responsible for the configuration and deploy of the solution, and solution runtime components, which represents the solution running the MES business logics. In case the same target environment is used for managing multiple plants, one host can run multiple runtimes of a solution, each one for a plant. The life cycle of each instance is completely independent from the other and each runtime accesses only its own data.

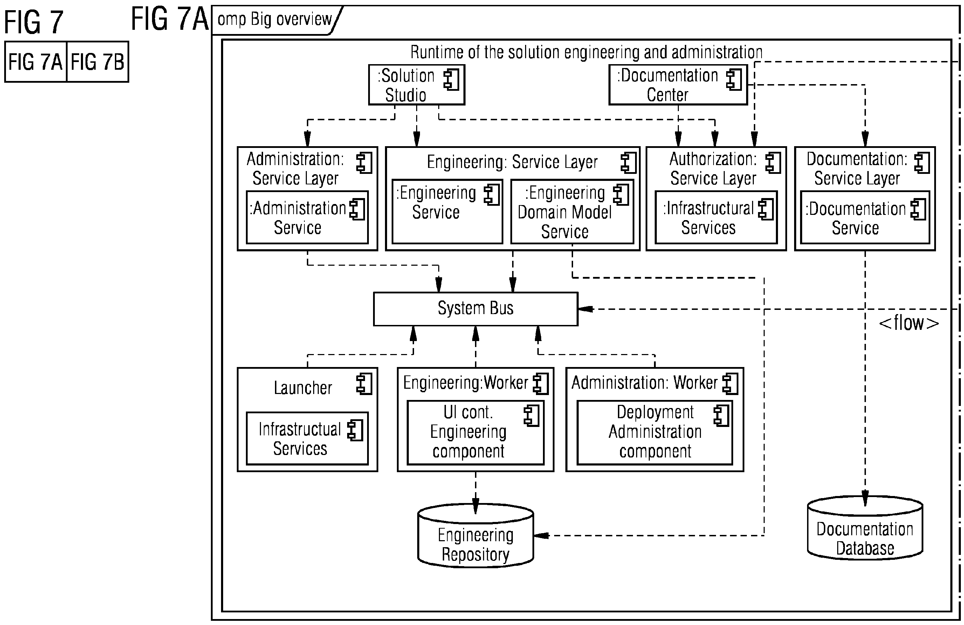

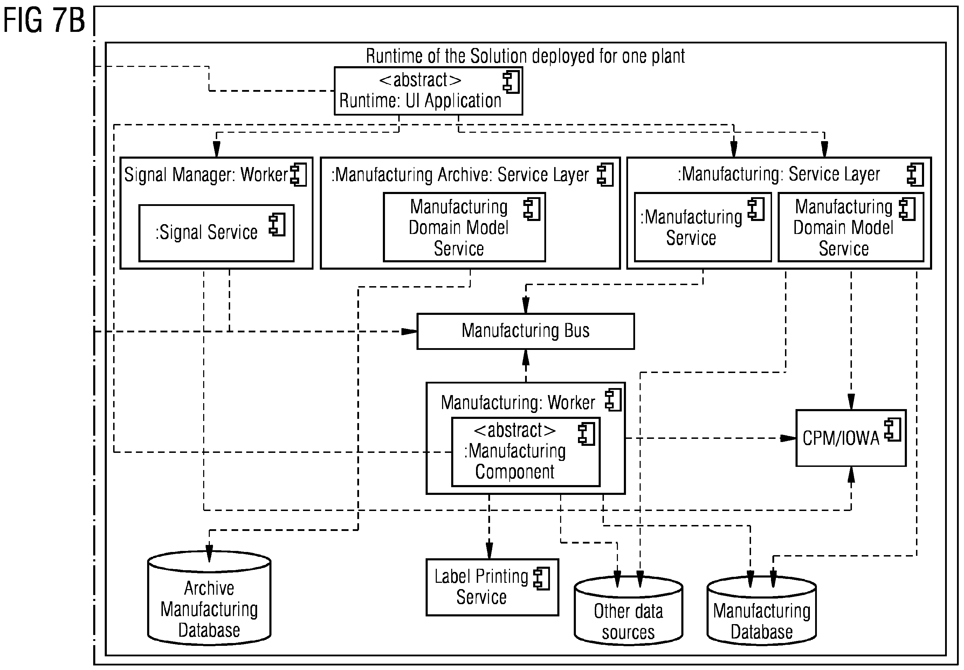

In regard of "Runtime of the solution deployed per Plant (see Figure 7)"

The clients on top are the UI applications which interact with the system throughout the service layers. Since Runtime Applications are configured per Plant, each screen communicates via its own runtime end point (runtime and data archiving). The service layer role is to adapt the backend functionalities to the client. It does not execute any logic.

Workers are in charge of executing the logic and they are decoupled from service layers through the service bus. Runtime workers instances are per Plant.

At the bottom of the diagram the repositories are depicted. These can be accessed directly from service layer to read data. Through Plant specific end point, the system automatically reads data from the right tenant.

Workers can modify data on them. Even in this case, Plant specific workers automatically read and write data leveraging on the right tenant.

Based on the above, on multiplant environment:
One Application Pool for each plant is created. The Application Pool manages the corresponding applications under sit-svc and sit-arch and has the same identity of the other Application Pools defined by the MES/MOMO solution.

Under sit-svc and sit-arch virtual folders, one new virtual folder with the Id of the plant is created and it contains the Web Application (named "application") and inside:
a Symbolic link to %SITUNIFIEDSYSTEMROOT%svc-runtime\bin folder App_offline.htm
web.config

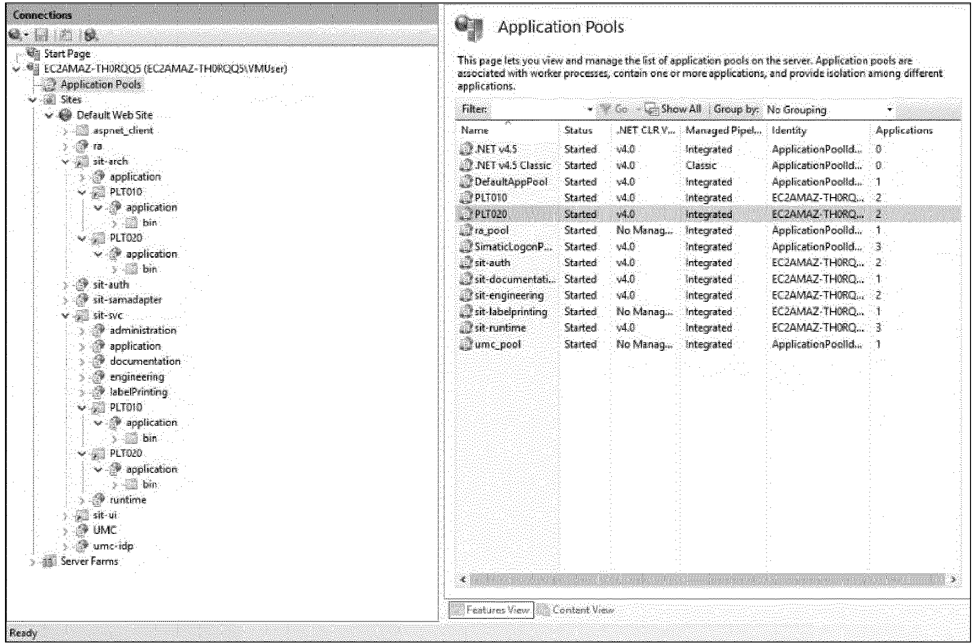

For the corresponding physical structure two new folders are created, plants-web and plants-arch, both available in %SITUnifiedSystemData% folder. The folder structure is the following:

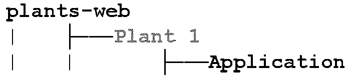

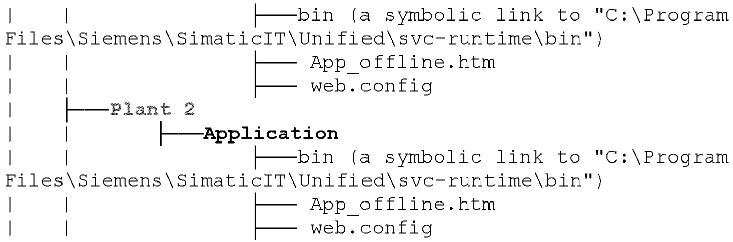

The web.config file contains the information about the plant:

```
  <appSettings>
      <add key="PlantId" value="<Plant Id>"></add>
  </appSettings
```

The same structure has been added for plants-arch folder:

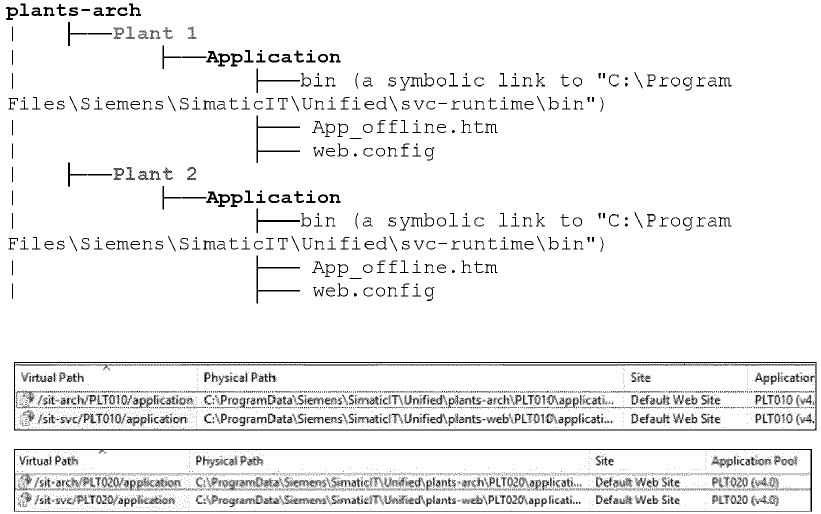

Dedicated runtime and archiving end points are created (http(s)://<hostname>/sit-svc/<PlantId>/application/<appname>/odata/; where the <PlantId> is mapped into a virtual directory, while application is the Web Application). See below List of end points in a Multiplant Environment

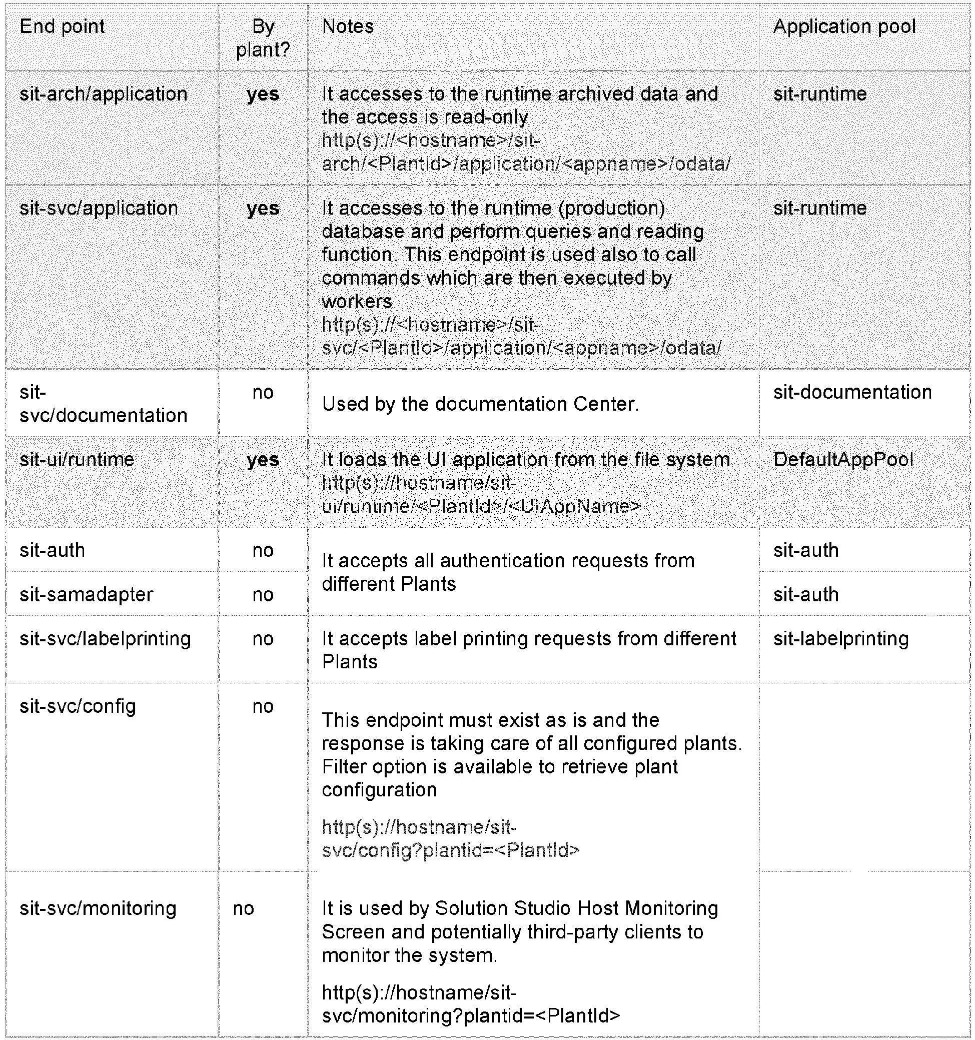

Thanks to the above dedicated end point, any third-party systems can easily access Plant owned data thanks to its standard OData layer interface (MES/MOM solution Service Layer).
call business logic thanks to its REST API.

A corresponding virtual host is created on RabbitMQ server application. Following RabbitMQ convention, each virtual host provide logical grouping and separation of resources, and connections to a virtual host can only operate on exchanges, queues, bindings, and so on in that virtual host

Dedicated tenant aimed to host MES data per Plant. Multitenancy architecture avoids polluting a Plant with data which are relevant for another site. Consequently, each user has visibility on and can modify only the data related to his/her plant.

After the solution is deployed on selected Plant, Solution configuration is deployed on the above-mentioned folders and dedicated business workers are instantiated.

### Point 5: Diagnostic and Supportability

Traces and log information generated by a central MES system include clear information about the plant they refer to. In this way, it is easy to troubleshoot what is going on in a given plant, discarding traces and logs of other plants which are not relevant.

### Testing the Manufacturing Solution via OpenAPI Tool

Once your Manufacturing Solution is deployed and started, the user can inspect and test the Public Commands exposed by the Solution by means of any OpenAPI tool, e.g. Swagger or Postman.

During the Solution build operation, the system generates a set of meta descriptor files which apply the OpenAPI Specification v3.0.3. In regard of multiplant environment the user can:
View Commands for the Solution: any OpenAPI tool can directly interact with Foundation APIs in either of the following ways: by launching the OpenAPI tool on a remote machine and accessing the http://<HostName>/sit-svc/<PlantId>/Application/$openapi endpoint
by launching the OpenAPI tool locally on an MES/MOM solution host and opening the meta descriptor.

Viewing Commands for each App: to directly inspect the Commands of each App, and the related Extension Apps, which are included in the Solution, from any OpenAPI tool in either of the following ways: by launching the OpenAPI tool on a remote machine and accessing a different endpoint for each App as follows: http://<HostName>/sit-svc/<PlantId>/Application/<AppName>/odata/$openapi by launching the OpenAPI tool locally on an Opcenter EX FN Foundation host and opening the meta descriptor of each required App at the following
path: %ProgramData%\Siemens\SimaticIT\Unified\Deploy\metadata\<PlantI d>\<AppPrefix.AppName>.openapi.json file

### Monitoring Worker and Host Status

Understanding the state of the MES/MOM solution environment is essential for ensuring system reliability and stability. Information about system health and performances not only helps you to face and solve issues, but it also ensures that actions are carried out with confidence.

One of the best ways to gain this insight within the system is by means of a robust monitoring system that gathers metrics, visualizes data, and alerts operators when issues arise. For this purpose, the platform provides a dedicated endpoint that can be queried from custom web client applications or monitoring tools (e.g., Zabbix) to retrieve information about environment hosts and running workers. In regard of multiplant environment, perform the query by sending a GET request specifying the Plant Id http://<hostname>/sit-svc/monitoring?plantId=<myplantId>

### Point 6: How to manage Plant differences

Based on the previous technical features, it will be possible to configure the system to manage plant differences.

| Use Case | Dedicated end point | Multi tenancy | Configurable business logic (event-based; pre-checks and post-actions) | Security | User Interface |
|---|---|---|---|---|---|
| **Plant-specific production processes:** each plant implements its own production process | | 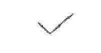 V (workflow or configuration keys) | 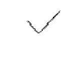 | | |
| **Third Party system interoperability:** Each plant integrates different 3 Party System like different Legacy or ERP systems | 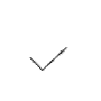 | | 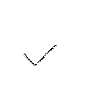 | | |
| **Plant with additional specific scope:** A plant requires additional functionalities | | | | | 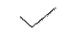 |
| | | | | | Ad hoc runtime application |
| | | | | | Specific screen visible only to users on that plant |
| **Plant-specific tuning:** Even though processes are almost harmonized, a plant requires some minor tuninq | | | 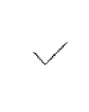 | | 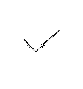 |

Comparing the known existing solutions (including DELMIA Apriso Solution), Opcenter EX FN Solution solves the following limitations: Settings and Customizations per Plant: customer requires to harmonize the Solution configuration among Plants but on the same time he/she wants flexibility in configuring plant specific use cases (when required).

Single point of failure: the performance and the behavior of one plant is not affected by workload peaks or eventual issues on other plants. Furthermore, a plant has no downtime during updates on the other plants requiring a stop and during the rollout of new plants No need for synchronized production stop in all Plants when a MES needs to be updated: engineering and deployment model must be per Plant. Customer wants schedule when the changes will be applied, according to the plant needs, for example at the shift change in a plant that could not coincide with the shift change in another plant. IDs for MES data must not be unique across Plants: each user has visibility on and can modify only the data related to his/her plant. In addition to that, Customer requires to identify MES object with the same IDs, even if they are belonging to different Plants Dassault solution: Pro&Cons versus existing solutions on the market (see below summary; for extra information pleare refer to AES-Introduction-to-DELMIA-Apriso-Infrastructure-Hardware-and-Virtualization attached slides).

DELMIA Apriso Solution; Pros (highlighted in green) and Cons (highlighted in red)

## Claims

1. A method for operating a plurality of production plants by a manufacturing execution system, said method, comprising the steps of:
a) providing a central computational hardware as regional hub for running an MES software; said MES software being enabled to manage production processes throughout the plurality of production plants;
b) configuring a first manufacturing execution system for a first single plant being connected to the regional hub;
c) creating for each further plant the respective manufacturing executions system by inheriting all configurations of the first manufacturing execution system to these further manufacturing executions systems; and
d) configuring these additional plants over time in the existing solution in the regional hub without re-installing the software of the manufacturing executions system and without re-applying some configurations already performed in the first plant.

2. The method according to claim 1, wherein some configurations are common to all plants wherein once performed in one plant, they are automatically applied to all available plants, regardless of when the plants are created.

3. The method according to claim 1 or 2, wherein other configurations are defined at plant-specific level and are performed according to the plant needs.

4. The method according to any of the preceding claims, wherein the regional Hub operates the manufacturing executions systems for all plants while the user chooses the suitable regional hub from an infrastructure perspective, such as available CPU, RAM, Disk, Redundant Network, and so on, thus any server used in the regional hub to host the software of the plant-specific manufacturing execution system solutions serving and managing said plurality of multiple plants.

5. The method according to claim 4, wherein the servers of this MES/MOM solution distributed environment are alternatively:
a) Physical in-house servers local to one of the plants;
b) Private Cloud Virtual Machines hosted by an on-premises virtual environment like VMWare, local to one of the plants;
c) Public Cloud IaaS instances hosted by a public Cloud provider datacenter.

6. The method according to any of the preceding claims wherein once the manufacturing execution system solution is configured, deploying it plant by plant as well as starting it on runtime hosts and updating the database structures.

7. The method according to any of the preceding claims wherein a host management page being enabled to display all available plants, regardless of the plant the user is working on and preferably when stopping the host, all plant services for this specific plant are automatically stopped.

8. The method according to any of the preceding claims wherein
the process data related to the different plants is visible only to the users enabled for the relevant plant.

9. The method according to any of the preceding claims wherein all process data, including master data, e.g., materials, master recipes or bills of process, bill of materials, is stored in different data repositories.

10. The method according to claim 9 wherein for the case that some process data is relevant for multiple plants, said process data is exported and imported among the different plant repositories.

11. The method according to any of the preceding claims wherein a section in a central database of said regional hub is shared among the various plants.

12. The method according to any of the preceding claims wherein all the configuration performed, such as security, web UI application, data archiving, etc.) are stored in a configuration database and contextualized per plant; configurations and artifacts that are required at runtime are consolidated in a governance repository creating a deployment package.
